# EUROPÄISCHE PATENTSCHRIFT

(11) **EP 2 850 019 B1**
(45) Veröffentlichungstag und Bekanntmachung des Hinweises auf die Patenterteilung: **12.08.2020**
(21) Anmeldenummer: 13711331.2
(22) Anmeldetag: 15.03.2013
(51) Int. Cl.: B65D 83/06, G01F 11/18

(54) **DOSIERSPENDER**
DOSING DISPENSER
DOSEUR

(30) Priorität: 20.03.2012 EP 12160378
(43) Veröffentlichungstag der Anmeldung: 25.03.2015
(73) Patentinhaber: RPC Bramlage GmbH, 49393 Lohne (DE)
(72) Erfinder: MÜLLER, Uwe, 51373 Leverkusen (DE); SIEMERS, Sölen, 42109 Wuppertal (DE); WIEHL, Wolfgang, 50999 Köln (DE); GÖTTKE, Sabine, 49393 Lohne (DE)
(74) Vertreter: Müller, Enno
(86) Internationale Anmeldenummer: PCT/EP2013/055420
(87) Internationale Veröffentlichungsnummer: WO 2013/139707

(56) Entgegenhaltungen:
- EP-A2- 0 396 990
- WO-A2-2011/056552
- US-A1- 2003 164 386
- US-A1- 2008 302 826
- US-A1- 2011 284 123
- US-B1- 6 962 274

## Beschreibung

Die Erfindung betrifft einen Dosierspender mit Dosierkolben zur Dosierung von Formulierungen eines Arzneimittels oder Nahrungsergänzungsmittels in Form eines fließfähigen Schüttguts mit einem Partikeldurchmesser im Bereich von 100-1000 µm.

Ein Dosierspender für Pulver ist aus EP 0 396 990 A2 bekannt. Der Dosierspender aus EP 0 396 990 A2 besteht aus einem Gehäuse mit Vorratskammer, deren Boden eine Auslassöffnung aufweist, welche in eine Führungshülse für einen Schieber mit Druckplatte und mit Rückstellfeder mündet, wobei der Schieber einen in seiner Ruhestellung unterhalb der Auslassöffnung befindlichen Kanal aufweist, dessen Auswurföffnung in Ruhestellung durch die Führungshülse abgedeckt ist. In Ruhestellung wird die Dosierkammer über die Auslassöffnung aus der Vorratskammer gefüllt. Bei Betätigung der Druckplatte des Schiebers wird die Auslassöffnung geschlossen und der Schieber in die Auswurfstellung geschoben, so dass der Kanal über die Führungshülse hinausgeschoben und dadurch entleert wird. Der Dosierspender aus EP 0 396 990 A2 ist im Detail in Fig. 1, 2 dargestellt. Er besteht aus einem Gehäuse 1 mit Vorratskammer 2, deren Boden 3 eine Auslassöffnung 4 aufweist, welche in eine Führungshülse 5 für einen Schieber 6 mit Druckplatte 7 und Rückstellfeder 8 mündet. Der Boden 3 ist allseitig zur Auswurfstelle hin geneigt. Die Führungshülse 5 besitzt einen kreisförmigen Querschnitt. Der Querschnitt des Schiebers 6 ist in seinem oberen Bereich der Querschnittsform der Führungshülse 5 angepasst, so dass in diesem Bereich eine gewisse Dichtwirkung gegen Eindringen von Pulver besteht. Der Schieber 6 ist von einem Kanal 9 durchquert, welcher in Ruhestellung des Schiebers 6 mit der Auslassöffnung 4 fluchtet. Das Volumen dieses Kanals 9 entspricht der mit einem Auswurf dosierbaren Menge an Pulver. Unterhalb der Auslassöffnung 4 dient die Führungshülse 5 als dichtende Abdeckung für die Auswurföffnung 10 des Kanals 9 und reicht in Richtung der Auswurfstellung so weit, dass der Kanal 9 in keiner Stellung die Vorratskammer 2 mit dem freien Raum verbindet. Sowohl Gehäuse 1 als auch Schieber 6 sind im Spritzgießverfahren aus Kunststoff hergestellt. Eine genaue Dosierung wird dadurch erreicht, dass beim Übergang des Schiebers von der Ruhestellung (Füllstellung) in die Auswurfstellung der Kanal für einen Moment weder mit der Auslassöffnung des Bodens, noch mit dem freien Raum Verbindung besitzt.

Der beschriebene Dosierspender gemäß EP 0 396 990 A2 ist für Pulver ausgelegt worden. Pulverpartikel haben typischerweise Durchmesser kleiner als 50 µm. Der bekannte Dosierspender ist jedoch nachteilig bei der Dosierung von fließfähigen Schüttgütern mit einem Partikeldurchmesser im Bereich von 100-1000 µm, insbesondere bei kugelförmigen Partikeln. Zwar wird durch Anpassung des Querschnittes von Schieber und Führungshülse versucht zu verhindern, dass Partikel zwischen Schieber und Führungshülse gelangen, aber dies wird nur als problematisch in Bezug auf eine eventuelle Verstopfung oder Blockierung des Schiebers angesehen.

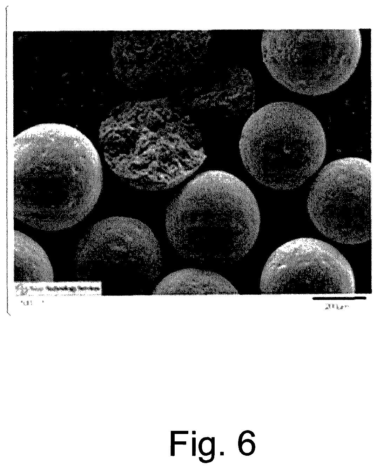

Bei der Dosierung von fließfähigen Schüttgütern mit einem Partikeldurchmesser im Bereich von 100-1000 µm, insbesondere bei kugelförmigen Partikeln, mit dem bekannten Dosierspender stellt sich ein neues Problem: Sobald Partikel zwischen Schieber und Führungshülse gelangt, werden sie durch Abrasion zerstört. In Fig. 6 ist beispielhaft gezeigt wie solchermaßen zerstörte Partikel aussehen können. Wenn solchermaßen veränderte Partikel aus dem Dosierspender ausgegeben werden, kann dies zu Problemen bei der Anwendung der Formulierung führen. Das Freisetzungsprofil eines in den Partikeln enthaltenen Wirkstoffs kann sich verändern oder die orale Aufnahme eines in seiner Form veränderten Partikels kann zu Verletzungen sowie zu Ablagerungen in der Speiseröhre führen.

Deshalb muss verhindert werden, dass Partikel aus der Formulierung eines Arzneimittels oder Nahrungsergänzungsmittels in Form von einem fließfähigen Schüttgut mit einem Partikeldurchmesser im Bereich von 100-1000 µm, überhaupt durch Abrasion zerstört werden und dass zerstörte Partikel vom Dosierspender ausgeworfen werden.

Die Lösung der erfindungsgemäßen Aufgabe besteht in einem an sich bekannten Dosierspender mit einem speziell ausgestalteten Schieber - im Folgenden "Dosierkolben" genannt - und in einem Dosierkolben für den an sich bekannten Dosierspender.

Der Dosierspender besteht aus einem Gehäuse enthaltend eine Vorratskammer, deren Boden eine Auslassöffnung aufweist, eine Führungshülse mit kreisförmigem Querschnitt, in die die Auslassöffnung mündet. In der Führungshülse ist der erfindungsgemäße Dosierkolben, der einen Dosierraum aufweist, verschieblich angeordnet. Der Dosierkolben ist zwischen einer Füllstellung, in der der Dosierraum in Verbindung mit der Auslassöffnung der Vorratskammer steht und einer Auswurfstellung, in der der Dosierraum in Verbindung mit dem freien Raum steht, verschiebbar.

Der erfindungsgemäße Dosierkolben eines erfindungsgemäßen Dosierspenders nach Anspruch 1 wird durch zwei kreisförmige Platten gebildet, die beabstandet zueinander und konzentrisch auf einer Achse angeordnet sind. Mindestens eine, bevorzugt beide Platten weisen ausgehend von ihrem äußeren Umfang eine ringförmige Verbreiterung auf mit einer axialen Ausdehnung in die zur jeweils anderen Platte entgegengesetzten Seite, wobei der Außendurchmesser der ringförmigen Verbreiterung größer ist als der Durchmesser der zugehörigen kreisförmigen Platte und auch größer ist als der Innendurchmesser der Führungshülse (Übermaß) in die der Dosierkolben eingesetzt werden kann. Die ringförmige Verbreiterung besteht aus einem elastischen Material. Die ringförmige Verbreiterung ist geeignet sich passgenau an die Innenwand der Führungshülse anzulegen. Bevorzugt besteht die ringförmige Verbreiterung aus einem elastischen Kunststoff, zum Beispiel High Density Polyethylen (HDPE).

Die Achse des Dosierkolbens ist zur Erleichterung seiner Betätigung bevorzugt mit einer Druckplatte verbunden. Um eine mehrfache Betätigung des Dosierkolbens zu ermöglichen kann der Dosierspender eine Rückstellfeder aufweisen, die den Dosierkolben aus der Auswurfstellung in die Ruhestellung (=Füllstellung) zurückbringt. Das Gehäuse und der Dosierkolben des Dosierspenders können im Spritzgießverfahren aus Kunststoff hergestellt worden sein.

Mit dem erfindungsgemäßen Dosierkolben nach Anspruch 9 wird verhindert, dass bei der Schiebebewegung des Dosierkolbens in der Führungshülse die Partikel durch Abrasion zerstört werden und/oder den Dosierkolben blockieren. Falls einzelne Partikel gegen die ringförmige Verbreiterung gedrückt werden, so gibt diese wegen ihrer Elastizität nach und die Partikel gelangen als Ganzes auf die vom Dosierraum abgewandte Seite der ringförmigen Verbreiterung.

In einer anderen Ausführungsform des erfindungsgemäßen Dosierkolbens hat mindestens eine der beiden kreisförmigen Platten außerdem noch eine zylinderförmige Verlängerung in axialer und zur anderen Platte entgegengesetzten Richtung. Der Außendurchmesser der zylinderförmigen Verlängerung ist abhängig vom Durchmesser der Partikel für die der Dosierspender eingesetzt werden soll, soviel geringer als der Innendurchmesser der Führungshülse, dass Partikel, die sich zwischen der zylinderförmigen Verlängerung und der Innenwand der Führungshülse befinden, nicht zerrieben werden. In dieser Ausführungsform ist die oben bereits beschriebene ringförmige Verbreiterung aus einem elastischen Material am Ende der zylinderförmigen Verlängerung angesetzt statt direkt an der kreisförmigen Platte.

In einer weiteren Ausführungsform hat jede zylinderförmigen Verlängerung weiterhin an ihrem Ende einen ringförmig umlaufenden Bereich, der einen größeren Außendurchmesser hat als die übrigen Bereiche der zylinderförmigen Verlängerung. Dieser ringförmige Bereich bildet eine Kante, die weitestgehend verhindert, dass vollständige oder zerstörte Partikel, die in den Bereich zwischen der zylinderförmigen Verlängerung und der Innenwand der Führungshülse gelangt sind, diesen wieder verlassen. Auch in dieser Ausführungsform ist die oben bereits beschriebene ringförmige Verbreiterung aus einem elastischen Material am Ende der zylinderförmigen Verlängerung jenseits der ringförmigen Verbreiterung angesetzt statt direkt an der kreisförmigen Platte.

Bevorzugt hat mindestens die Platte, die der Richtung, von der aus der Dosierkolben betätigt wird z.B. mittels einer Druckplatte, zugewandt ist, die beschriebene zylinderförmige Verbreiterung.

Die zylinderförmige Verbreiterung der Platte, die der Richtung, von der aus der Dosierkolben betätigt wird, zugewandt ist, hat einen Bereich, der bei Einschub des Dosierkolbens in die Führungshülse der Auslassöffnung der Vorratskammer zugewandt ist. Bevorzugt hat dieser Bereich einen Außendurchmesser, der dem Innendurchmesser der Führungshülse entspricht. Hierdurch wird verhindert, dass Partikel aus der Vorratskammer in den Bereichen geringeren Innendurchmessers der zylinderförmigen Verlängerung gesammelt werden, wenn der Dosierkolben sich in Auswurfstellung befindet. Soweit zweckdienlich, um zum Beispiel mehr Stabilität des Dosierkolbens innerhalb der Führungshülse zu gewährleisten, können einzelne Bereiche der zylinderförmigen Verlängerung einen Außendurchmesser haben, der dem Innendurchmesser der Führungshülse entspricht.

### Figuren und Beispiele

Es zeigen:

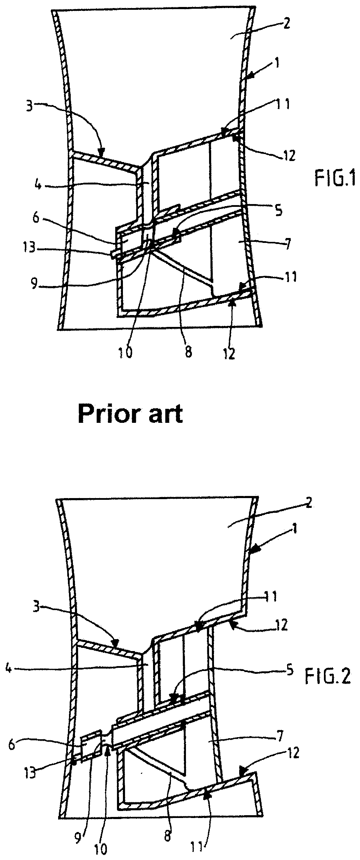

- Fig. 1: Dosierspender aus dem Stand der Technik mit dem Schieber in Ruhestellung
- Fig. 2: Dosierspender aus dem Stand der Technik mit dem Schieber in Auswurfstellung.
- Fig. 3: Dosierspender mit erfindungsgemäßem Dosierkolben als Explosionszeichnung
- Fig. 4: Dosierspender mit erfindungsgemäßem Dosierkolben im Querschnitt
- Fig. 5a, 5b: Erfindungsgemäßer Dosierkolben in zwei Perspektiven
- Fig. 6: Zerstörte und unzerstörte Partikel eines fließfähigen Schüttguts von 200-400 µm Durchmesser

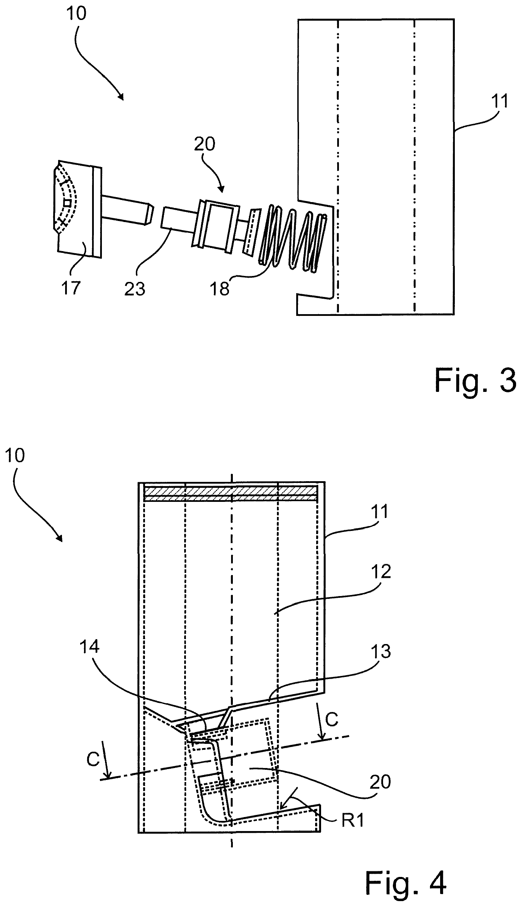

Die Fig. 3 und 4 zeigen den Dosierspender 10 mit erfindungsgemäßem Dosierkolben 20 als Explosionszeichnung beziehungsweise im Querschnitt. Der Dosierspender 10 besteht aus einem Gehäuse 11, das eine Vorratskammer 12 für eine Formulierung von Arzneimitteln oder Nahrungsergänzungsmitteln in Form von einem fließfähigen Schüttgut mit einem Partikeldurchmesser im Bereich von 100-1000 µm enthält und deren Boden 13 eine Auslassöffnung 14 aufweist. Weiterhin befindet sich im Gehäuse 11 eine Führungshülse für einen Dosierkolben 20, der mit einer Druckplatte 17 verbunden ist. Die Rückstellfeder 18 bringt den Dosierkolben 20 und die Druckplatte 17 jeweils in die Ruhestellung (=Füllstellung). Der Boden 13 der Vorratskammer 12 ist im Bereich der Auslassöffnung 14 trichterförmig verjüngt. Die Führungshülse für den Dosierkolben 20 besitzt einen kreisförmigen Querschnitt. In Ruhestellung wird der Dosierraum des Dosierkolbens 20 über die Auslassöffnung 14 aus der Vorratskammer 12 gefüllt. Bei Betätigung der mit der Achse 23 des Dosierkolbens 20 verbundenen Druckplatte 17 wird die Auslassöffnung 14 geschlossen und der Dosierkolben 20 in die Auswurfstellung geschoben, so dass sich der Dosierraum öffnet und entleert wird. Sowohl Gehäuse 11 als auch Dosierkolben 20 können im Spritzgießverfahren aus Kunststoff hergestellt werden.

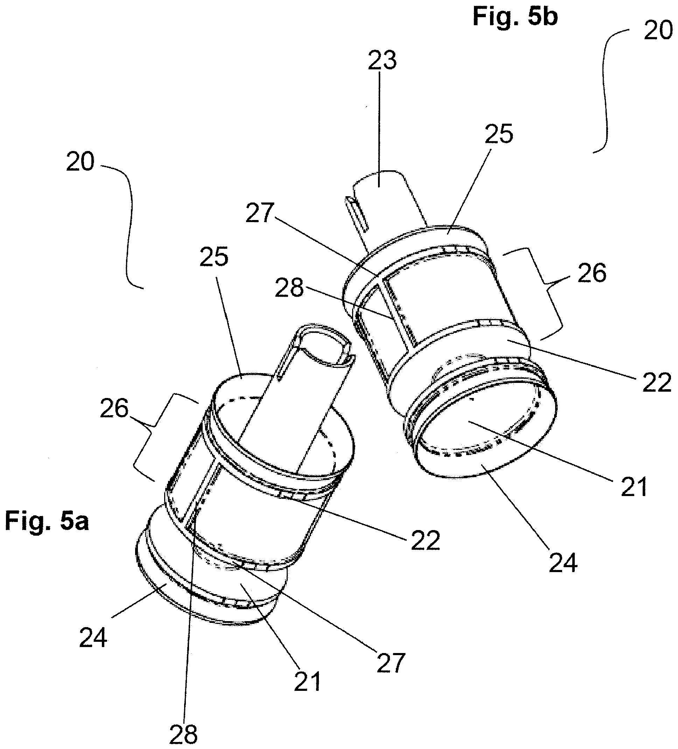

Die Fig. 5a und 5b zeigen den erfindungsgemäßen Dosierkolben 20 in zwei Perspektiven. Der erfindungsgemäße Dosierkolben 20 wird durch zwei kreisförmige Platten 21, 22 gebildet, die beabstandet zueinander und konzentrisch auf einer Achse 23 angeordnet sind. Bevorzugt entspricht der Außendurchmesser der beiden Platten 21, 22 dem Innendurchmesser der Führungshülse des Dosierspenders 10. Die Platten 21, 22 weisen jede ausgehend von ihrem äußeren Umfang eine ringförmige Verbreiterung 24, 25 auf mit einer axialen Ausdehnung in die zur jeweils anderen Platte 21, 22 entgegengesetzten Seite, wobei der Außendurchmesser der ringförmigen Verbreiterung 24, 25 größer ist als der Innendurchmesser der Führungshülse (Übermaß) und die ringförmige Verbreiterung 24, 25 aus einem elastischen Material besteht. Die Platte 22, die entlang der Achse 23 des Dosierkolbens (20) näher zu der Seite angeordnet ist, von der aus der Dosierkolben (20) betätigt wird, hat eine zylinderförmige Verlängerung 26 in axialer und zur ersten Platte 21 entgegengesetzten Richtung. Der Außendurchmesser der zylinderförmigen Verlängerung 26 ist bis auf wenige Bereiche geringer als der Innendurchmesser der Führungshülse, so dass Partikel, die sich zwischen der zylinderförmigen Verlängerung 26 und der Innenwand der Führungshülse befinden, nicht zerrieben werden. Am Ende der zylinderförmigen Verlängerung befindet sich ein ringförmig umlaufender Bereich 27, der einen größeren Außendurchmesser hat als die übrigen Bereiche der zylinderförmigen Verlängerung. Dieser umlaufende, ringförmige Bereich 27 erlaubt Partikel, die sich im Bereich der zylinderförmigen Verlängerung 26 befinden, dort zu halten. Die ringförmige Verbreiterung 25 befindet sich am Ende der zylinderförmigen Verlängerung 26 im Anschluss an den umlaufenden ringförmigen Bereich 27. Ein stegförmiger Bereich 28, der in axialer Richtung auf der Oberfläche der zylinderförmigen Verlängerung 26 verläuft, hat ebenfalls einen größeren Außendurchmesser als die anderen Bereiche der zylinderförmigen Verlängerung 26 und entspricht dem Innendurchmesser der Führungshülse.

## Patentansprüche

1. Dosierspender zur Dosierung von Formulierungen eines Arzneimittels oder Nahrungsergänzungsmittels in Form eines fließfähigen Schüttguts mit einem Partikeldurchmesser im Bereich von 100-1000 µm bestehend aus
einem Gehäuse (11) enthaltend
eine Vorratskammer (12), deren Boden (13) eine Auslassöffnung (14) aufweist,
eine Führungshülse mit kreisförmigem Querschnitt, in die die Auslassöffnung (14) mündet,
ein in der Führungshülse verschieblich angeordneter Dosierkolben (20) mit einem Dosierraum, der zwischen einer Füllstellung, in der der Dosierraum in Verbindung mit der Auslassöffnung (14) der Vorratskammer (12) steht und einer Auswurfstellung, in der der Dosierraum (12) in Verbindung mit dem freien Raum steht, verschiebbar ist,
**dadurch gekennzeichnet dass**
der Dosierkolben (20) zwei kreisförmige Platten (21, 22) aufweist, die beabstandet zueinander und konzentrisch auf einer Achse (23) angeordnet sind und mindestens eine der beiden kreisförmigen Platten (21, 22) ausgehend von ihrem äußeren Umfang eine ringförmige Verbreiterung (24, 25) aufweist mit einer axialen Ausdehnung in die zur jeweils anderen Platte (21, 22) entgegengesetzten Seite, wobei der Außendurchmesser der ringförmigen Verbreiterung (24, 25) größer ist als der Innendurchmesser der Führungshülse und die ringförmige Verbreiterung (24, 25) aus einem elastischen Material besteht und der Dosierraum durch die Innenwand der Führungshülse und die beiden kreisförmigen Platten (21, 22) gebildet wird.

2. Dosierspender nach Anspruch 1, **dadurch gekennzeichnet, dass** beide Platten (21, 22) ausgehend von ihrem äußeren Umfang eine ringförmige Verbreiterung (24, 25) aufweisen mit einer axialen Ausdehnung in die zur jeweils anderen Platte (21, 22) entgegengesetzten Seite.

3. Dosierspender nach Anspruch 1 oder 2, **dadurch gekennzeichnet, dass** die ringförmige Verbreiterung (24, 25) aus High Density Polyethylen (HDPE) besteht.

4. Dosierspender nach einem der Ansprüche 1 bis 3, **dadurch gekennzeichnet, dass** mindestens eine der Platten (21, 22) eine zylinderförmige Verlängerung (26) in axialer und zur anderen Platte (21, 22) entgegengesetzten Richtung hat und der Außendurchmesser der zylinderförmigen Verlängerung (26) geringer ist als der Innendurchmesser der Führungshülse.

5. Dosierspender nach Anspruch 4, **dadurch gekennzeichnet, dass** die Platte, die entlang der Achse (23) des Dosierkolbens (20) näher zu der Seite angeordnet ist, von der aus der Dosierkolben (20) betätigt wird, die zylinderförmige Verlängerung (26) hat.

6. Dosierspender nach einem der Ansprüche 4 oder 5, **dadurch gekennzeichnet, dass** sich am Ende der zylinderförmigen Verlängerung (26) ein ringförmig umlaufender Bereich (27) befindet, der einen größeren Außendurchmesser hat als die übrigen Bereiche der zylinderförmigen Verlängerung (26).

7. Dosierspender (10) nach einem der Ansprüche 4 bis 6, **dadurch gekennzeichnet, dass** sich die ringförmige Verbreiterung (25) aus elastischem Material am Ende der zylinderförmigen Verlängerung (26) befindet.

8. Dosierspender (10) nach einem der Ansprüche 1 bis 7, **dadurch gekennzeichnet, dass** die Achse (23) des Dosierkolbens (20) mit einer Druckplatte (17) verbunden ist und dass der Dosierspender (10) bevorzugt eine Rückstellfeder (28) aufweist, die den Dosierkolben (20) in die Ruhestellung (=Füllstellung) bringt.

9. Dosierkolben (20) für einen Dosierspender (10) zur Dosierung von Formulierungen eines Arzneimittels oder Nahrungsergänzungsmittels in Form eines fließfähigen Schüttguts mit einem Partikeldurchmesser im Bereich von 100-1000 µm aufweisend
eine Achse (23),
zwei kreisförmige Platten (21, 22), die beabstandet zueinander und konzentrisch auf der Achse (23) angeordnet sind,
mindestens eine der beiden kreisförmigen Platten (21, 22) weist ausgehend von ihrem äußeren Umfang eine ringförmige Verbreiterung (24, 25) auf mit einer axialen Ausdehnung in die zur jeweils anderen Platte (21, 22) entgegengesetzten Seite, wobei der Außendurchmesser der ringförmigen Verbreiterung (24, 25) größer ist als der Durchmesser der zugehörigen kreisförmigen Platte (21, 22) und die ringförmige Verbreiterung (24, 25) aus einem elastischen Material besteht.

10. Dosierkolben (20) nach Anspruch 9, **dadurch gekennzeichnet, dass** beide Platten (21, 22) ausgehend von ihrem äußeren Umfang eine ringförmige Verbreiterung (24, 25) aufweisen mit einer axialen Ausdehnung in die zur jeweils anderen Platte (21, 22) entgegengesetzten Seite.

11. Dosierkolben (20) nach Anspruch 9 oder 10, **dadurch gekennzeichnet, dass** die ringförmige Verbreiterung (24, 25) aus Low Density Polyethylen (LDPE) besteht.

12. Dosierkolben (20) nach einem der Ansprüche 9 bis 11, **dadurch gekennzeichnet, dass** mindestens eine der Platten (21, 22) eine zylinderförmige Verlängerung in axialer und zur anderen Platte (21, 22) entgegengesetzten Richtung hat und dass der Außendurchmesser der zylinderförmigen Verlängerung (26) geringer ist als der Außendurchmesser der kreisförmigen Platten (21,22).

13. Dosierkolben (20) nach einem der Ansprüche 9 bis 12, **dadurch gekennzeichnet, dass** sich am Ende der zylinderförmigen Verlängerung (26) ein ringförmig umlaufender Bereich (27) befindet, der einen größeren Außendurchmesser als die übrigen Bereiche der zylinderförmigen Verlängerung (26) hat.

14. Dosierkolben (20) nach Anspruch 12 oder 13, **dadurch gekennzeichnet dass** sich die ringförmige Verbreiterung (25) aus elastischem Material am Ende der zylinderförmigen Verlängerung (26) befindet.

15. Dosierkolben (20) nach einem der Ansprüche 12 bis 14, **dadurch gekennzeichnet, dass** ein axial ausgedehnter Bereich der zylinderförmigen Verlängerung (26) denselben Außendurchmesser wie die beiden Platten (21, 22) hat.

## Claims

1. Dosing dispenser for dosing formulations of a drug or nutritional supplement in the form of a free-flowing bulk material having a particle diameter in the range of 100 - 1000µm, composed of
a housing (11) including
a storage chamber (12), the base (13) of which displays an outlet opening (14),
a guide sleeve having a circular cross section, into which the outlet opening (14) opens,
a dosing piston (2) which is displaceably disposed in the guide sleeve and which has a dosing chamber which is displaceable between a filling position, in which the dosing chamber is connected to the outlet opening (14) in the storage chamber (12), and an ejection position, in which the dosing chamber (12) is connected to the free space,
**characterized in that**
the dosing piston (20) displays two circular plates (21, 22) which are disposed in a spaced-apart and concentric manner on an axle (23), and, proceeding from its outer circumference, at least one of the two circular plates (21, 22) displays an annular widening (24, 25) having an axial expansion into the side which is opposite in each case the other plate (21, 22), wherein the outer diameter of the annular widening (24, 25) is larger than the inner diameter of the guide sleeve, and the annular widening (24, 25) is composed of an elastic material, and the dosing chamber is formed by the inner wall of the guide sleeve and the two circular plates (21, 22).

2. Dosing dispenser according to claim 1, **characterized in that** both plates (21, 22) proceeding from their outer circumference, display an annular widening (24, 25) having a axial expansion into the side which is opposite in each case the other plate (21, 22).

3. Dosing dispenser according to claim 1 or 2, **characterized in that** the annular widening (24, 25) is composed of high-density polyethylene (HDPE).

4. Dosing dispenser according to one of claims 1 to 3, **characterized in that** at least one of the plates (21, 22) has a cylindrical extension (26) in the axial direction which is counter to the other plate (21, 22) and that the outer diameter of the cylindrical extension (26) is smaller than the inner diameter of the guide sleeve.

5. Dosing dispenser according to claim 4, **characterized in that** the plate which, along the axle (23) of the dosing piston (20), is disposed closer to that side from which the dosing piston (20) is actuated, has the cylindrical extension (26).

6. Dosing dispenser according to one of claims 4 or 5, **characterized in that** an annularly encircling region (27) which has a larger outer diameter than the remaining regions of the cylindrical extension (26) is located on the end of the cylindrical extension.

7. Dosing dispenser (10) according to one of claims 4 to 6, **characterized in that** the annular widening (25), composed of an elastic material, is located on the end of the cylindrical extension.

8. Dosing dispenser (10) according to one of claims 1 to 7, **characterized in that** the axle (23) of the dosing piston (20) is connected to a pressure plate (17) and that the dosing dispenser (10) preferably has a return spring (28) which places the dosing piston (20) in the rest position (=filling position).

9. Dosing piston (20) for a dosing dispenser (19) for dosing formulations of a drug or nutritional supplement in the form of a free-flowing bulk material having a particle diameter in the range of 100 -1000 µm displaying an axle (23),
two circular plates (21,22), which are disposed in a spaced-apart and concentric manner on the axle (23),
proceeding from their outer circumference, at least one of the two circular plates (21, 22) displays an annular widening (24, 25) having an axial expansion into the side which is opposite in each case the outer plate (21, 22), wherein the outer diameter of the annular widening (24, 25) is larger than the diameter of the associated circular plate (21, 22), and the annular widening (24, 25) is composed of elastic material.

10. Dosing piston (20) according to claim 9, **characterized in that** both plates (21, 22), proceeding form their outer circumference, display an annular widening (24, 25) having an axial expansion into the side which is opposite in each case the other plate (21, 22).

11. Dosing piston (20) according to claim 9 or 10, **characterized in that** the annular widening (24, 25) is composed of low-density polyethylene (LDPE).

12. Dosing piston (20) according to one of claims 9 to 11, **characterized in that** at least one of the plates (21, 22) has a cylindrical extension in the axial direction which is counter to the other plate (21, 22) and that the outer diameter of the cylindrical extension (26) is smaller than the outer diameter of the circular plates (21, 22).

13. Dosing piston (20) according to one of claims 9 to 12, **characterized in that** an annularly encircling region (27) which has a larger outer diameter than the remaining regions of the cylindrical extension (26) is located on the end of the cylindrical extension (26).

14. Dosing piston (20) according to claim 12 or 13, **characterized in that** the annular widening (25), composed of an elastic material, is located on the end of the cylindrical extension (26).

15. Dosing piston (20) according to one of claims 12 to 14, **characterized in that** an axially expanded region of the cylindrical extension (26) has the same outer diameter as the two plates (2, 22).

## Revendications

1. Distributeur doseur pour le dosage de formulations d'un médicament ou d'un complément alimentaire sous la forme d'une matière en vrac capable de s'écouler et ayant un diamètre de particules dans la plage de 100 à 1000 µm, constitué
d'un boîtier (11) contenant
une chambre de stockage (12) dont le fond (13) présente une ouverture de sortie (14),
un manchon de guidage à section transversale circulaire, dans laquelle débouche l'ouverture de sortie (14),
un piston de dosage (20) agencé de manière déplaçable dans le manchon de guidage et comportant une chambre de dosage, qui est déplaçable entre une position de remplissage, dans laquelle la chambre de dosage est en communication avec l'ouverture de sortie (14) de la chambre de stockage (12), et une position d'éjection, dans laquelle la chambre de dosage (12) est en communication avec l'espace libre,
**caractérisé en ce que**
le piston de dosage (20) présente deux plaques circulaires (21, 22) qui sont agencées à distance l'une de l'autre et concentriquement sur un axe (23) et **en ce qu'**au moins une des deux plaques circulaires (21, 22) présente un élargissement annulaire (24, 25) partant de sa circonférence extérieure avec une extension axiale dans le côté opposé respectivement à l'autre plaque (21, 22), dans lequel le diamètre extérieur de l'élargissement annulaire (24, 25) est supérieur au diamètre intérieur du manchon de guidage et l'élargissement annulaire (24, 25) est constitué d'un matériau élastique et la chambre de dosage est formée par la paroi intérieure du manchon de guidage et les deux plaques circulaires (21, 22).

2. Distributeur doseur selon la revendication 1, **caractérisé en ce que** les deux plaques (21, 22) présentent un élargissement annulaire (24, 25) partant de leur circonférence extérieure avec une extension axiale dans le côté opposé respectivement à l'autre plaque (21, 22).

3. Distributeur doseur selon la revendication 1 ou 2, **caractérisé en ce que** l'élargissement annulaire (24, 25) est constitué de polyéthylène haute densité (PEHD).

4. Distributeur doseur selon l'une quelconque des revendications 1 à 3, **caractérisé en ce qu'**au moins l'une des plaques (21, 22) présente un prolongement cylindrique (26) dans la direction axiale et opposée à l'autre plaque (21, 22) et le diamètre extérieur du prolongement cylindrique (26) est inférieur au diamètre intérieur du manchon de guidage.

5. Distributeur doseur selon la revendication 4, **caractérisé en ce que** la plaque qui, le long de l'axe (23) du piston de dosage (20), est agencée plus proche du côté à partir duquel le piston de dosage (20) est actionné, présente le prolongement cylindrique (26).

6. Distributeur doseur selon l'une des revendications 4 ou 5, **caractérisé en ce qu'**à l'extrémité du prolongement cylindrique (26) se trouve une zone périphérique annulaire (27) qui présente un diamètre extérieur supérieur aux autres zones du prolongement cylindrique (26).

7. Distributeur doseur (10) selon l'une des revendications 4 à 6, **caractérisé en ce que** l'élargissement annulaire (25) en matériau élastique est situé à l'extrémité du prolongement cylindrique (26).

8. Distributeur doseur (10) selon l'une des revendications 1 à 7, **caractérisé en ce que** l'axe (23) du piston de dosage (20) est relié à une plaque de pression (17) et que le distributeur doseur (10) présente de préférence un ressort de rappel (28) qui amène le piston de dosage (20) dans la position de repos (= position de remplissage).

9. Piston de dosage (20) pour un distributeur doseur (10) pour le dosage de formulations d'un médicament ou d'un complément alimentaire sous la forme d'une matière en vrac capable de s'écouler et ayant un diamètre de particules dans la plage de 100 à 1000 µm, comprenant
un axe (23),
deux plaques circulaires (21, 22) qui sont agencées à distance l'une de l'autre et concentriquement sur l'axe (23),
au moins une des deux plaques circulaires (21, 22) présente un élargissement annulaire (24, 25) partant de sa circonférence extérieure avec une extension axiale dans le côté opposé respectivement à l'autre plaque (21, 22), dans lequel le diamètre extérieur de l'élargissement annulaire (24, 25) est supérieur au diamètre de la plaque circulaire associée (21, 22) et l'élargissement annulaire (24, 25) est constitué d'un matériau élastique.

10. Piston de dosage (20) selon la revendication 9, **caractérisé en ce que** les deux plaques (21, 22) présentent un élargissement annulaire (24, 25) partant de leur circonférence extérieure avec une extension axiale dans le côté opposé respectivement à l'autre plaque (21, 22).

11. Piston de dosage (20) selon la revendication 9 ou 10, **caractérisé en ce que** l'élargissement annulaire (24, 25) est constitué de polyéthylène basse densité (PEBD).

12. Piston de dosage (20) selon l'une des revendications 9 à 11, **caractérisé en ce qu'**au moins une des plaques (21, 22) présente un prolongement cylindrique en direction axiale et opposée à l'autre plaque (21, 22) et **en ce que** le diamètre extérieur du prolongement cylindrique (26) est inférieur au diamètre extérieur des plaques circulaires (21, 22).

13. Piston de dosage (20) selon l'une des revendications 9 à 12, **caractérisé en ce qu'**à l'extrémité du prolongement cylindrique (26) se trouve une zone périphérique annulaire (27) qui présente un diamètre extérieur supérieur aux autres zones du prolongement cylindrique (26).

14. Piston de dosage (20) selon la revendication 12 ou 13, **caractérisé en ce que** l'élargissement annulaire (25) en matériau élastique est situé à l'extrémité du prolongement cylindrique (26).

15. Piston de dosage (20) selon l'une des revendications 12 à 14, **caractérisé en ce qu'**une zone d'extension axiale du prolongement cylindrique (26) présente le même diamètre que les deux plaques (21, 22).
